# EUROPÄISCHE PATENTSCHRIFT

(11) **EP 1 483 124 B1**
(45) Veröffentlichungstag und Bekanntmachung des Hinweises auf die Patenterteilung: **24.01.2007**
(21) Anmeldenummer: 02794998.1
(22) Anmeldetag: 16.12.2002
(51) Int. Cl.: B60H 1/00, B60H 3/00

(54) **KLIMAGEBLÄSE**
CLIMATE CONTROL SYSTEM FAN
SOUFFLERIE DE CLIMATISATION

(30) Priorität: 06.03.2002 DE 10209837
(43) Veröffentlichungstag der Anmeldung: 08.12.2004
(73) Patentinhaber: ROBERT BOSCH GMBH, 70442 Stuttgart (DE)
(72) Erfinder: HERSEL, Walter, 71229 Leonberg (DE); BREITLING, Wolfram, 74343 Sachsenheim (DE)
(86) Internationale Anmeldenummer: PCT/DE2002/004583
(87) Internationale Veröffentlichungsnummer: WO 2003/074304

(56) Entgegenhaltungen:
- EP-A- 0 812 715
- DE-A- 19 836 307
- US-A- 6 002 573
- US-B1- 6 332 759

## Beschreibung

Die Erfindung betrifft ein Gebläse für eine Heizungs- und/oder Klimaanlage, insbesondere für ein Kraftfahrzeug. Ein solches Gebläse weist ein Gebläserad und einen dieses Gebläserad antreibenden elektrischen Motor auf und ist typischerweise im Klimakasten eines Fahrzeuges angeordnet.

### Stand der Technik

Kraftfahrzeuge der Oberklasse und darüber hinaus auch zunehmend Fahrzeuge der Mittelklasse werden neben einer Heizungsanlage, inzwischen standardmäßig auch mit einer Klimaanlage ausgestattet. Eine solche Heizungs- und/oder Klimaanlage weist im allgemeinen zumindest einen Verdampfer, mindestens einen Heizungswärmetauscher und ein Klimagebläse auf. Bei der mit der Klimatisierung einhergehenden Abkühlung der Luft findet sehr oft auch eine Entfeuchtung statt. Dabei kondensiert die in der Luft befindliche Feuchte an kalten Oberflächen aus. Während das flüssige Kondensat mit der Zeit weitgehend abgeleitet wird, verbleibt jedoch ein gewisser Flüssigkeitsfilm auf den entsprechenden Oberflächen. So neigen beispielsweise Verdampfer in Fahrzeugklimaanlagen durch den ständigen Feuchtigkeitsniederschlag aus der zugeführten Luft zu Pilzbelägen und Bakterienkulturen, die sich aus Verschmutzungen der transportierten Luft ergeben. Während eines Fahrzeugstillstandes bzw. in den Sommermonaten kann es dann, aufgrund der höheren Temperaturen, zu einem starken Wachstum der Bakterien kommen. Die Abbauprodukte dieser Bakterien führen zu einer Geruchsbelästigung und gesundheitlichen Beeinträchtigung wie beispielsweise Allergien bei den Fahrzeugnutzern.

Es werden daher vermehrt Filter eingesetzt, um ein Eindringen von Verunreinigungen in die Klimaanlage zu verhindern. Pilz- und Bakterienbefall kann beispielsweise auch durch toxische Beschichtungen oder thermische Prozesse zu einem Großteil verhindert werden. Diese Maßnahmen reduzieren zwar die Ablagerungen und die damit einhergehende Geruchsbildung, jedoch kann diese nicht gänzlich verhindert werden, insbesondere nicht mit zunehmendem Alter der Klimaanlage. Die über die Jahre auftretende Beschichtung an den Kondensationsflächen vermindert darüber hinaus den Wärmeübergang, beispielsweise zwischen einem Verdampfer und der einströmenden, zu kühlenden Luft.

In der DE 19962382 A1 wird eine "Automatische Sauerstoffdusche mit Duftnote" unter Anderem für den Einsatz in Kraftfahrzeugen offenbart, bei der Sauerstoff und Duftstoffe aus entsprechenden Vorratsbehältern über Verbindungsleitungen zu einem Ventilator transportiert werden, der diese Stoffe dann mit der Umgebungsluft, beispielsweise in der Fahrzeugkabine vermischt, so dass Atemluft, die durch zu hohe Ozon- oder Smogwerte oder sonstige Luftverschmutzungen belastet ist, auf normale Atemluftwerte gesenkt wird.

Die DE 199 62 382 A1 sieht vor, für die "Automatische Sauerstoffdusche mit Duftnote" ein eigenes Frischluftgebläse einzubauen oder die Einsprühdüsen für den Sauerstoff oder der Duftessenzen am Endstück der Klima- beziehungsweise Lüftungsanlage, hinter dem Armaturenbrett und vor Austritt der Luft am Armaturenbrett anzubringen.

Aus der DE 199 33 180 A1 ist ein Apparat zur Deodorierung und Sterilisierung von Luft zur Verwendung in Raumluftfiltern und Kraftfahrzeugen bekannt, bei dem die Luft durch Ionisatoren, die in Strömungsrichtung vor einem Filtermedium angeordnet sind, mit aktiven Sauerstoffionen und Ozon angereichert wird. Die Ionisationsbaugruppe der Vorrichtung der DE 199 33 180 A1 ist dabei fest mit dem Filtermedium verbunden, so dass bei einem Austausch des Filtermediums die Ionisationsbaugruppe immer mit ausgetauscht werden muss.

Aus der DE 196 51 403 A1 ist ein Apparat und ein Verfahren zur Verbesserung der Luftqualität in Kabinen von Fahrzeugen bekannt, bei dem ein physikalisches Luftaufbereitungsgerät derart im Belüftungssystem des Fahrzeuges integriert ist, dass sich innerhalb der Kabinen stets eine bestimmte Anzahl von Ionen befinden. Auf diese Weise wird sichergestellt, dass die reduzierte Anzahl der Ionen in der Kabine, die sich bei verschmutzter, verrauchter oder belasteter Luft normalerweise einstellt, korrigiert wird. In der Vorrichtung der DE 196 51403 A1 ist das physikalische Luftaufbereitungsgerät mit einem Filter kombiniert.

Aus der DE 198 36 307 A1 ist ein Elektrofilter-Luftentkeimungssystem für Kraftfahrzeuge bekannt, welches in integrierter Form in der Klimaanlage eines Kraftfahrzeuges ausgebildet ist. Dabei wird das Luftführungsteil, welches auch als Klimaanlagensystem ausgebildet ist, mit einem Sprühelektrodensystem und einem Niederschlagselektrodensystem ausgebildet. Bereits am Lufteintritt vor und/oder hinter dem Verdampfer oder im Inneren des Gebläserades ist eine Sprühelektrode vorhanden. Alternativ kann bei der Vorrichtung der DE 198 36 307 A1 das Gebläserad selbst als lonisator dienen. Hinter dem Gebläserad, im Bereich vor und hinter dem Wärmetauscher der Klimaanlage, d. h. im eigentlichen Gehäuse der Luftführung sind bei der Vorrichtung nach der DE 198 36 307 A1 weitere Ionisatoren vorgesehen.

Hierbei sind vorzugsweise die Schaufeln des Gebläserades so geformt, dass praktisch an den Endkanten des Luftaustritts vorzugsweise ionisierende Spitzen ausgebildet sind. Das Gebläserad mit integriertem Sprühelektrodensystem ist dabei mit einer entsprechenden Stromquelle versehen, sodass die Ionisation auch zweckdlenlich stattfindet.

Aufgabe der Erfindung ist es, eine Vorrichtung bereitzustellen, mit der geruchsbildende Belege in Fahrzeugklimaanlagen mit großer Effektivität, aber bei möglichst geringem zusätzlichen Einbauvolumen, biologisch unwirksam gemacht werden können, sodass eine Geruchsbildung zuverlässig verhindert oder aber zumindest deutlich reduziert werden kann.

### Vorteile der Erfindung

Das erfindungsgemäße Gebläse, welches für den notwendigen Luftdurchsatz beispielsweise in einer Heizungs- und/oder Klimaanlage eines Kraftfahrzeuges sorgt, weist ein Gebläserad und einen dieses Gebläserad antreibenden Motor auf.

Erfindungsgemäß ist vorgesehen, dass mindestens ein Ionenerzeuger, im Folgenden auch Ionisator genannt, in einer baulichen Verbindung mit dem Klimagebläse steht. In aller Regel ist der Einbauort eines Fahrzeugklimagebläses in der Klimaanlage nach der Frischluft-Umluftklappe vor den Wärmetauschern zum Heizen bzw. Kühlen der Luft. Dieser Einbauort eignet sich in vorteilhafter Weise gerade auch für einen Ionenerzeuger, dessen chemisch aktive Ionen mit dem biologischen Material, welches zu einer Geruchsbelästigung führt, reagieren soll. Um eine effektive Beseitigung oder Deaktivierung des geruchserzeugenden Belages zu erreichen, muss möglichst die gesamte Fläche beispielsweise des Verdampfers einer Klimaanlage mit Ionen bestrichen werden. Dazu sollten die Ionen mit der zugeführten Frischluft oder Umluft gut vermischt sein.

Damit alle Luftzweige erfasst sind, muss der Ionenerzeuger also nach der Frischluft-Umluftklappe, jedoch vor dem Verdampfer im Luftstrom der Klimaanlage untergebracht sein. Ein derartiger Einbauort für einen Ionenerzeuger lässt sich in vorteilhafter Weise realisieren, wenn der Ionenerzeuger in einer baulichen Verbindung mit dem Klimagebläse selbst steht. Darüber hinaus führt das Klimagebläse zu einer vorteilhaften Durchmischung der angesaugten Luft mit den chemisch aktiven Ionen. In besonders vorteilhafter Weise steht der Ionenerzeuger in einer baulichen Verbindung mit einer elektronischen Schaltung zum Betrieb des Klimagebläses.

Durch die in den weiteren Ansprüchen aufgeführten Maßnahmen sind vorteilhafte Verbesserungen und Weiterbildungen des in Anspruch 1 angegebenen Gebläses möglich.

Die Klimagebläseelektronik ist normalerweise über einen Kühlkörper zur Wärmeabfuhr der Verlustleistung der Elektronikbausteine direkt der Luftströmung zum Verdampfer ausgesetzt. Die Klimaelektronik ist daher beispielsweise direkt unter dem Lüfterrad oder an der Stelle mit der höchsten Luftgeschwindigkeit dem Luftstrom ausgesetzt. direkt unter dem Lüfterrad oder an der Stelle mit der höchsten Luftgeschwindigkeit dem Luftstrom ausgesetzt.

In vorteilhafter Weise kann daher der Ionenerzeuger beispielsweise auf einem Kühlkörper der Klimagehäuseelektronik beziehungsweise in unmittelbarer Nähe eines solchen Kühlkörpers angeordnet sein. Der Kühlkörper wiederum wird in den Motorhalter des Klimagebläses montiert, wobei dann beispielsweise die Kühlzapfen des Kühlkörpers mit dem Ionisator unter dem Lüfterrad liegen. Der Ionisator ist damit derart in die Klimagebläseelektronik integriert, dass die austretenden Ionen von der vorbei streichenden Luft, die für eine Wärmeabfuhr von den Kühlkörpern der Klimagebläseelektronik sorgt, mitgerissen werden.

In besonders vorteilhafter Weise führt die Anordnung des Ionenerzeugers in oder auf einem Kühlkörper der Klimagebläseelektronik dazu, dass aufgrund einer starken Luftverwirbelung an der Kühlkörpergeometrie die Ionen gleichmäßig über dem Luftstrom verteilt werden.
Eine gleichmäßige Verteilung der reaktiven Ionen im Luftstrom ist notwendig, um die gesamte Fläche beispielsweise des Verdampfers mit Ionen gleichmäßig zu bestreichen und eine effektive Deaktivierung des biologischen Belages zu erreichen.

Die Klimagebläseelektronik bietet in vorteilhafter Weise bereits die gesamte Infrastruktur zum Betrieb eines Ionenerzeugers. So sind die Vernetzung, Strom- und Spannungsversorgung sowie die digitale Signalverarbeitung in der Klimagebläseelektronik vorhanden, so dass Ansteuerung, Überwachung, Regelung und Diagnose des Ionenerzeugers mit geringem technischem Aufwand in die Elektronikanordnung zur Steuerung des Klimagebläses eingebaut werden können. So schützt beispielsweise bei getakteten Klimagebläseelektroniken die sowieso bereits vorhandenen elektronischen Filter beispielsweise das Bordnetz des Fahrzeuges vor einer Taktfrequenz des Ionenerzeugers.

Eine Elektronikanordnung zur Steuerung beispielsweise eines Klimagebläses kann somit in einfacher und vorteilhafter Weise um einen Ionenerzeuger erweitert werden, der zu einer deutlichen Reduzierung der Geruchsbelästigung in einer Klimaanlage eines Kraftfahrzeuges führt. Der Ionenerzeuger, nebst seiner elektronischen Ansteuerung sowie die Klimagebläseelektronik können daher in einem vorteilhaften Ausführungsbeispiel des erfindungsgemäßen Gebläses in einem gemeinsamen Gehäuse untergebracht sein. Zur Vermeidung von elektronischen Störeffekten ist allerdings auch eine Anordnung denkbar, bei der die beiden Elektronikbestandteile in getrennten, aber miteinander verbundenen Gehäusen oder Gehäuseteilen angeordnet sind.

In besonderer Weise eigenen sich Sauerstoffionen, speziell Ozon, um über eine Wechselwirkung mit dem kondensierten Wasser eine Reduzierung des biologisch aktiven Materials zu erreichen.

Durch das erfindungsgemäße Gebläse, das einen Ionenerzeuger in baulicher Verbindung integriert hat, lässt sich in vorteilhafter Weise eine Heizungs- und oder Klimaanlage für ein Kraftfahrzeug realisieren, die zu deutlich verringerten Geruchsbelästigungen im Fahrzeuginnenraum führt.

Die erfindungsgemäße Kombination eines Ionenerzeugers mit der Klimagebläseelektronik spart in vorteilhafter Weise darüber hinaus Einbauplatz, Gewicht und Bauelementeaufwand für das System ein. Das erfindungsgemäße Gebläse führt zu einer besonders guten Durchmischung der Luft mit den chemisch aktiven Ionen, so dass diese das biologisch wirksame, geruchsbildende Material zu einem Großteil unwirksam machen können. Da der Ionenerzeuger und die Klimagebläseelektronik zum gleichen elektrischen System gehören, können die Daten dieser Teilsysteme gemeinsam und damit einfacher verarbeitet werden.

### Zeichnung

In der Zeichnung ist ein Ausführungsbeispiel einer erfindungsgemäßen Vorrichtung dargestellt, die in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten bzw. zu weiteren, sinnvollen Kombinationen zusammenfassen.

Es zeigen:
Figur 1 eine vereinfachte, schematische Darstellung einer Kraftfahrzeugklimaanlage,
Figur 2 eine schematische Darstellung eines Klimagebläsemoduls im Schnitt,
Figur 3 eine schematische Darstellung eine Steuergerätes für das Klimagebläse in einer Aufsicht,
Figur 4 eine Seitenansicht des Klimagebläses-Steuergerätes aus Figur 3,
Figur 5 ein Blockschaltbild der gemeinsamen Elektronik von Klimagebläse und Ionisator.

### Beschreibung eines Ausführungsbeispiels

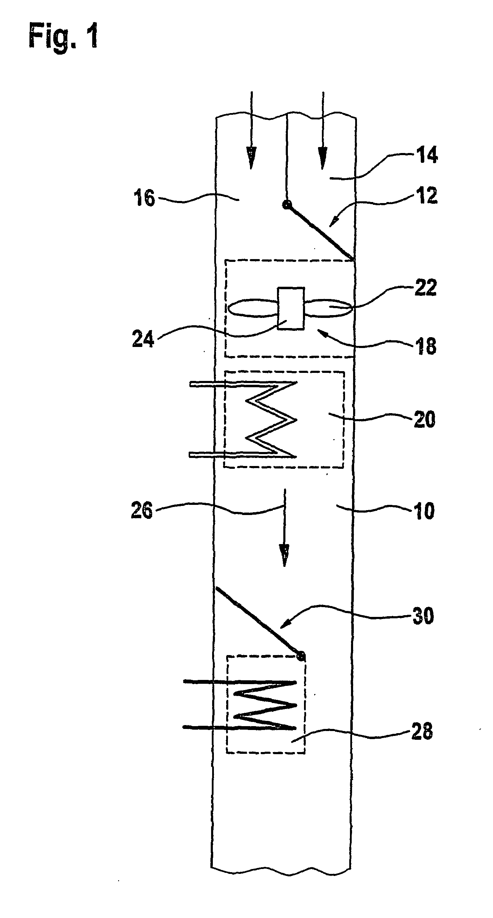

Figur 1 zeigt den prinzipiellen Aufbau des Heizungsteils einer Heizungs- und Klimaanlage eines Kraftfahrzeuges. Über einen Luftkanal 10 des Klimakastens wird wahlweise Frischluft oder Umluft angesaugt. Zur Auswahl der Luftart dient eine Frischluft-Umluftklappe 12, die von den Insassen des Kraftfahrzeuges manuell bedient werden kann beziehungsweise durch eine entsprechende automatisierte Steuerung eingestellt wird. Die durch die Frischluft-Umluftklappe 12 ausgewählte Luft aus dem Frischluftkanal 14 beziehungsweise dem Umluftkanal 16 wird durch ein Gebläse 18 angesaugt und über einen nachfolgenden Verdampfer 20 geführt.

Der mit einem nicht weiter dargestellten Kühlkreislauf verbundene Verdampfer kühlt die vom Gebläse 18 geförderte Luftmenge entsprechend vorgebbaren Werten ab. Bei dieser mit der Klimatisierung einher gehenden Abkühlung der Luft findet auch eine Entfeuchtung statt. Dabei kondensiert die in der Luft befindliche Feuchte an kalten Oberflächen, wie beispielsweise der Gehäuseoberfläche des Verdampfers, aus. Während das flüssige Kondensat mit der Zeit weitgehend abgeleitet wird, verbleibt jedoch ein gewisser Flüssigkeitsfilm auf den entsprechenden Oberflächen.

Das Gebläse 18, welches im Ausführungsbeispiel der Figur 1 lediglich schematisiert dargestellt ist, weist ein Gebläserad 22, einen dieses Gebläserad 22 antreibenden Motor 24 sowie eine elektronische Schaltung zur Steuer- und Regelung des Gebläses auf, die in Figur 1 der Übersicht halber nicht explizit dargestellt ist.

Die in Pfeilrichtung 26 den Luftkanal 10 durchströmende Luft kann wahlweise über einen Heizungswärmetauscher 28 geleitet werden. Mittels einer Heizungsklappe 30 kann die über den Heizungswärmetauscher 28 strömende Menge der vom Gebläse 18 geförderten Luft eingestellt werden. Auf diese Weise lässt sich die in den Innenraum des Kraftfahrzeuges gelangende Luft in ihrer Temperatur durch die Mischung von Kaltluftbeziehungsweise Warmluftanteilen variieren.

Durch Kondensation einer bestimmten Menge der im Luftkanal 10 geförderten Luft an der kalten Oberfläche des Verdampfers 20 kommt es zu dem beschriebenen Feuchtigkeitsniederschlag auf dem Gehäuse des Verdampfers 20. Dieser Feuchtigkeitsniederschlag legt dabei Verschmutzungen aus der zugeführten Luft auf dem Verdampfergehäuse ab. Diese Verschmutzungen führen zu unangenehmen Geruchsbelästigungen und eventuellen gesundheitlichen Beeinträchtigungen und sind daher zu vermeiden.

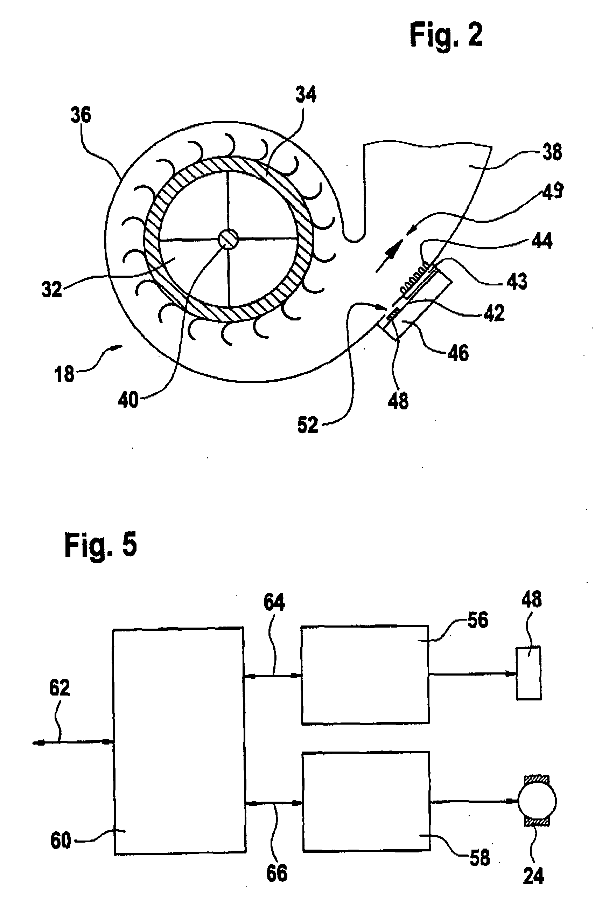

Figur 2 zeigt den prinzipiellen Aufbau eines erfindungsgemäßen Klimagebläses 18 in einer Prinzipskizze. Die zu fördernde Luft wird durch eine zentrale Öffnung 32 des Gebläses 18 angesaugt und durch das Gebläserad 34 beschleunigt und gefördert. Durch einen Leitapparat, der beispielsweise in das Gehäuse 36 des Gebläses 18 integriert sein kann, wird die beschleunigte Luft umgelenkt und durch eine tangentiale Öffnung 49 aus dem Klimagebläse 18 herausgedrückt. Das Gebläserad 34 wird über eine Welle 40 von einem in Figur 2 nicht dargestellten Elektromotor getrieben.

Das Klimagebläse 18 wird über einen Gebläseregler 42 gesteuert. Der Gebläseregler 42 weist eine Steuerelektronik und unter Anderem auch diverse Kühlkörper 43 mit beispielsweise Kühlzapfen 44 zur Abführung der Verlustwärme der Leistungselektronik des Gebläsereglers 42, auf. Der Gebläseregler 42 ist derart an dem Gehäuse 36 des erfindungsgemäßen Gebläses 18 angebracht, dass die Kühlzapfen 44 der Kühlkörper 43 in den vom Gebläse 18 geförderten Luftstrom hinein ragen. Auf diese Weise wird eine effektive Kühlung der Elektronikbausteine des Gebläsereglers 42 ermöglicht.

Das erfindungsgemäße Gebläse 18 nach dem Ausführungsbeispiel der Figur 2 weist einen Gebläseregler 42 auf, in dessen Gehäuse 46 zusätzlich ein Ionisator 48 untergebracht ist. Das Ionisatorelement 48 ist an die in Pfeilrichtung 50 vorbei streichende Luft im Klimasystem durch eine Öffnung 52 im Gehäuse 46 angebunden.

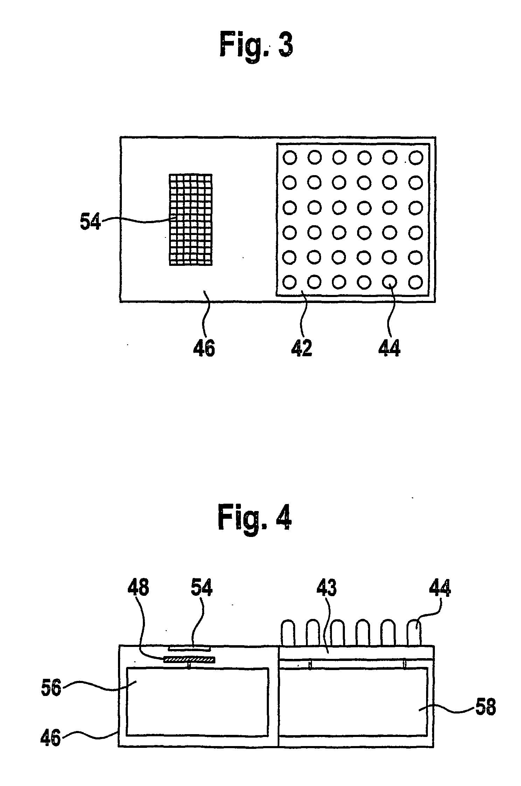

Figur 3 zeigt eine Aufsicht auf das Gehäuse 46, in dem der Gebläseregler 42 sowie der Ionisator 48 integriert sind. Zum Schutz gegen Berührung und aus Gründen der elektromagnetischen Verträglichkeit ist die Öffnung 52, die im Gehäuse 46 für den Ionisator 48 vorgesehen ist, durch ein Schutzgitter 54 abgedeckt. Die Hochspannungserzeugung für das Ionisationselement 48 erfolgt in einer Ionisatorelektronik 56, die ebenfalls im Gehäuse 46 des Gebläsereglers 42 integriert ist, wie es in Figur 4, einer Seitenansicht des Gebläsereglers 42, schematisch dargestellt ist. Wie in Figur 4 näher dargestellt, enthält das Gehäuse 46 zum Einen die Elektronik 58 für den Gebläseregler 42 des Klimagebläses 18 sowie zum anderen den Ionisator 48 nebst zugehöriger Hochspannungserzeugung 56. Durch die Integration des Ionisators 48 in das Gehäuse 46 beziehungsweise direkt in die Elektronik des Gebläsereglers 42 kann die in Figur 2 dargestellte, vorteilhafte Anordnung des Gebläsereglers 42 auch für den Ionisator in vorteilhafter Weise genutzt werden.

Wichtig für den Einbauort des Gebläsereglers 42 ist aus Kühlungsgründen die Luftumströmung der Elektronik des Gebläseleistungsreglers. Diese Luftumströmung des Gehäuses 46 und die damit einhergehende Luftverwirbelung an den Kühlzapfen 44 der Kühlkörper 43 der Gebläseelektronik sorgt für eine gute Vermischung der vom Ionisator emittierten Teilchen mit der vorbei streichenden Luft, so dass die chemisch aktiven Ionen weitgehend homogen über dem Luftstrom verteilt werden, so dass auch die mit Verunreinigungen belegte Oberfläche des Verdampfers 20 des Heizungs- und Kühlsystems gleichmäßig mit Ionen bestrichen wird.

Figur 5 zeigt ein Blockschaltbild der kombinierten Gebläseregler- und Ionisatorelektronik. Die signalverarbeitende Elektronik 60 des Steuerungssystems für das Klimagebläse 18 wird vorteilhafterweise sowohl für die Steuerung und Regelung des Gebläsereglers 42 und damit für den Motor 24 des Gebläses, als auch für den Ionisator 48 benutzt. Die Anbindung der signalverarbeitenden Elektronik 60 an die übrige Fahrzeugelektronik übernimmt eine Schnittstelle 62. Über die Schnittstellen bzw. Verbindungen 64 und 66 erhalten die Ionisatorelektronik 56 und die Elektronik 58 zur Steuerung des Klimagebläses ihre Ansteuersignale. Die spezifischen Elektroniken 56 beziehungsweise 58 steuern dann in bekannter Weise den Ionisator 48 beziehungsweise den Klimagebläsemotor 24 an.

In diese, in der Figur 5 dargestellten, gemeinsamen Steuerung des Klimagebläses können weitere Sensorsignale integriert werden, die beispielsweise eine Ansteuerung und Aktivierung des Ionisators oberhalb einer gewissen Temperaturschwelle auslösen. Auch ist es möglich, dass ein chemischer Sensor, eine entsprechende Geruchsentwicklung detektiert und sodann den Ionisator aktiviert.
Dazu sind lediglich die entsprechenden Sensoren und eine Signalverarbeitung, sowie die Ankopplung dieser Signale an die Steuerung notwendig.

Die erfindungsgemäße Vorrichtung ist nicht beschränkt auf das in den Figuren dargestellte Ausführungsbeispiel.

Insbesondere ist die erfindungsgemäße Vorrichtung nicht beschränkt auf die Verwendung in einem Kraftfahrzeug.

Die erfindungsgemäße Erfindung ist nicht beschränkt auf die Verwendung von Sauerstoffionen.

Die erfindungsgemäße Erfindung ist des weiteren nicht beschränkt auf die Deaktivierung von biologischem Material oder dessen Ausscheidungsprodukten. Insbesondere kann die erfindungsgemäße Vorrichtung zur allgemeinen Verbesserung der Luftqualität in einer Heizungs- und/oder Klimaanlage genutzt werden.

## Patentansprüche

1. Gebläse, für eine Heizungs- und/oder Klimaanlage, insbesondere für ein Kraftfahrzeug, mit einem Gebläserad (22) und einem dieses Gebläserad (22) antreibenden Motor (24), wobei mindestens ein Ionenerzeuger (48) in einer baulichen Verbindung mit dem Gebläse (18) angeordnet ist, **dadurch gekennzeichnet, dass** der Ionenerzeuger (48) In einer baulichen Verbindung mit einer elektronischen Schaltungsanordnung (58) zum Betrieb des Gebläses (18) angeordnet ist.

2. Gebläse nach Anspruch 1, **dadurch gekennzeichnet, dass** der Ionenerzeuger (48) derart mit dem Gebläse (18) verbunden ist, dass die aus dem Ionenerzeuger (48) austretenden Teilchen durch die vom Gebläse (18) bewegte Luft mitgerissen werden.

3. Gebläse nach Anspruch 1, **dadurch gekennzeichnet, dass** die elektronischen Schaltungsanordnung (58) zum Betrieb des Gebläses (18) und eine Schaltungsanordnung (56) zum Betrieb des Ionenerzeugers (48) in einem Gehäuse (46) angeordnet sind.

4. Gebläse nach Anspruch 1 oder 3, **dadurch gekennzeichnet, dass** der Ionenerzeuger (48) auf oder an einem Kühlkörper (43) der elektronischen Schaltungsanordnung (58) zum Betrieb des Gebläses (18) angeordnet ist.

5. Gebläse nach Anspruch 4, **dadurch gekennzeichnet, dass** die elektronischen Schaltungsanordnung (58,56) derart in das Gebläse (18) integriert ist, dass zumindest ein Kühlkörper (43) durch die vom Gebläse (18) bewegte Luft gekühlt wird.

6. Gebläse nach einem der vorhergehenden Ansprüche, **dadurch gekennzeichnet, dass** die elektrische Energieversorgung des Ionenerzeugers (48) mit einer Strombeziehungsweise Spannungsversorgung und /oder einer digitalen Signalverarbeitung der elektronischen Schaltungsanordnung (58) zum Betrieb des Gebläses (18) verbunden ist.

7. Gebläse nach einem der vorhergehenden Ansprüche, **dadurch gekennzeichnet, dass** die elektronische Schaltung (58) zum Betrieb des Gebläses (18) und/oder der Ionenerzeuger (48) getaktet sind.

8. Heizungs- und/oder Klimaanlage, insbesondere für ein Kraftfahrzeug, mit zumindest einem Verdampfer (20), mindestens einem Heizungswärmetauscher (28) und mindestens einem Klimagebläse (18) sowie einer das mindestens eine Klimagebläse (18) steuernden, elektronischen Schaltungsanordnung (58), **dadurch gekennzeichnet, dass** ein Ionenerzeuger (48) in einer baulichen Verbindung mit dem mindestens einen Klimagebläse (18) und der elektronischen Schaltungsanordnung (58) vorhanden ist.

9. Vorrichtung nach einem der vorhergehenden Ansprüche, **dadurch gekennzeichnet, dass** der Ionenerzeuger (48) Sauerstoffionen, insbesondere Ozon erzeugt und freisetzt.

## Claims

1. Blower for a heating and/or air conditioning system, in particular for a motor vehicle, having a blower impeller wheel (22) and a motor (24) which drives this blower impeller wheel (22), at least one ion generator (48) being arranged in a structural connection to the housing (18), **characterized in that** the ion generator (48) is arranged in a structural connection to an electronic circuit arrangement (58) for operating the blower (18).

2. Blower according to Claim 1, **characterized in that** the ion generator (48) is connected to the blower (18) in such a way that the particles which emerge from the ion generator (48) are carried along by the air moved by the blower (18).

3. Blower according to Claim 1, **characterized in that** the electronic circuit arrangement (58) for operating the blower (18) and a circuit arrangement (56) for operating the ion generator (48) are arranged in a housing (46).

4. Blower according to Claim 1 or 3, **characterized in that** the ion generator (48) is arranged on or at a heat sink (43) of the electronic circuit arrangement (58) for operating the blower (18).

5. Blower according to Claim 4, **characterized in that** the electronic circuit arrangement (58, 56) is integrated into the blower (18) in such a way that at least one heat sink (43) is cooled by the air moved by the blower (18).

6. Blower according to one of the preceding claims, **characterized in that** the electrical power supply of the ion generator (48) is connected to a power supply or voltage supply and/or a digital signal processing means of the electronic circuit arrangement (58) for operating the blower (18).

7. Blower according to one of the preceding claims, **characterized in that** the electronic circuit (58) for operating the blower (18) and/or the ion generator (48) are clocked.

8. Heating and/or air conditioning system, in particular for a motor vehicle, having at least one vaporizer (20), at least one heating heat exchanger (28) and at least one air conditioning system blower (18) as well as an electronic circuit arrangement (58) which controls the at least one air conditioning system blower (18), **characterized in that** an ion generator (48) is present in a structural connection to the at least one air conditioning system blower (18) and the electronic circuit arrangement (58).

9. Device according to one of the preceding claims, **characterized in that** the ion generator (48) generates and releases oxygen ions, in particular ozone.

## Revendications

1. Soufflante pour une installation de chauffage et/ou de climatisation, notamment dans un véhicule automobile, qui comprend une roue de soufflante (22) et un moteur (24) entraînant cette roue, avec au moins un générateur d'ions (48) relié constructivement à la soufflante (18),
**caractérisée en ce que**
le générateur d'ions (48) est relié constructivement à un circuit électronique (58) assurant le fonctionnement de la soufflante (18).

2. Soufflante selon la revendication 1,
**caractérisée en ce que**
le générateur d'ions (48) est relié à la soufflante (18) de manière que les particules sortant du générateur d'ions (48) sont entraînées par l'air mis en mouvement par la soufflante (18).

3. Soufflante selon la revendication 1,
**caractérisée en ce que**
le circuit électronique (58) assurant le fonctionnement de la soufflante (18) et un circuit électronique (56) assurant le fonctionnement du générateur d'ions (48) sont disposés dans un boîtier (46).

4. Soufflante selon la revendication 1 ou 3,
**caractérisée en ce que**
le générateur d'ions (48) est monté sur un corps de refroidissement (43) du circuit électronique (58) assurant le fonctionnement de la soufflante (18).

5. Soufflante selon la revendication 4,
**caractérisée en ce que**
les circuits électroniques (58, 56) sont intégrés à la soufflante (18) de manière qu'au moins un corps de refroidissement (43) est refroidi par l'air mis en mouvement par la soufflante (18).

6. Soufflante selon une des revendications précédentes,
**caractérisée en ce que**
l'alimentation en énergie électrique du générateur d'ions (48) est reliée à une alimentation en tension et en intensité et/ou à un traitement numérique du signal du circuit électronique (58) assurant le fonctionnement de la soufflante (18).

7. Soufflante selon une des revendications précédentes,
**caractérisée en ce que**
le circuit électronique (58) assurant le fonctionnement de la soufflante (18) et/ou le générateur d'ions (48) sont synchronisés.

8. Installation de chauffage et/ou de climatisation, notamment pour un véhicule, qui comprend au moins un évaporateur (20), au moins un échangeur thermique de chauffage (28) et au moins une soufflante de climatisation (18) ainsi qu'un circuit électronique (58) commandant l'installation de climatisation (18) au nombre d'une au moins,
**caractérisée en ce que**
un générateur d'ions (48) est en liaison constructive avec la soufflante de climatisation (18) au nombre d'une au moins et avec le circuit électronique (58).

9. Dispositif selon une des revendications précédentes,
**caractérisé en ce que**
le générateur d'ions (48) produit et dégage des ions d'oxygène, notamment de l'ozone.
